# EUROPEAN PATENT APPLICATION

(11) **EP 1 366 660 A1**
(43) Date of publication of application: **03.12.2003**
(21) Application number: 02254653.5
(22) Date of filing: 02.07.2002
(51) Int. Cl.: A01K 87/04, A01K 87/00

(54) **Fishing rod tip wich prevents wrapping of the fishing line around the tip and also improves casting performance**

(30) Priority: 28.05.2002 US 157379
(71) Applicant: Silver, Lawrence, Oakdale, NY 11769 (US)
(72) Inventor: Silver, Lawrence, Oakdale, NY 11769 (US)
(74) Representative: Silverman, Warren

(57) **Abstract**

A tip to be placed on a fishing rod. Conventional fishing rods usually terminate in an "eye" or "roller" end on the fishing pole. A more proper term for the end attachment on a pole is a "terminal guide" rather than an "eye". They are made in several sizes to fit various size shapes on fishing poles, however, they follow the industry standard of 64ths of an inch, i.e. a number four is 4/64ths inch hollow. A key innovation of the present invention is that it is conical (tapered) on the outside so that if the line did wrap around the tip, all that is necessary to get the line to unwrap is to hold the tip downward so gravity will unwrap the line as it peels off. The inside is hollow and shaped to fit the distal end of a fishing pole. Additionally, they are much thinner in cross section than all existing Terminal Guides that have an "eye" at the end. It is this "eye" (and its braces) on the normal tip that acts as a holder of the wraps. One of the things that makes the present invention tip unique is that it eliminates the raised "eye" and/or rollers on normal poles that acts as bumps or snags to hold the fishing line as it wraps.

## Description

### BACKGROUND OF THE INVENTION

### 1. Field of the Invention

The present invention relates to improvements in fishing rods. More particularly, the present invention relates to a significant improvement in the tip of a fishing rod. The present invention relates to fishing rods and particularly, to an attachment for fishing rods which prevents the fishing line from becoming entangled and improves casting performance.

### 2. Description of the Prior Art

A common problem in using fishing rods, and particularly in casting or reeling, is that the fishing line becomes entangled, snagged or wrapped at the end guide of the fishing rod. Different brands and different types of fishing lines have different qualities of tending to coil and/or of flexibility, making them subject to wrapping. This problem is encountered especially in fishing at night when the fisherman cannot see well. In addition, this is compounded by the fact that many fishing lines are translucent and/or pale in color making them hard to see. In addition, children who are unaccustomed to handling fishing rods encounter the problem of entanglement quite frequently. The problem of wrapping is especially true in thinner-more flexible rods that wiggle or vibrate, such as when the boat moves from a wave action, or when line is rapidly let out with a weight on it (that causes the line not to descend smoothly) causing a wiggle at the end of the pole. In addition to creating problems with the line tangling around the "eye" of fishing pole or a "roller guide" of a fishing pole, the nature of current fishing rods is such that when the line is wrapped you cannot cast or retrieve line as the wrap acts as a knot. There is a problem when trolling of the pole vibrating when the trolled lure bounces on the water causing the tip of the pole to vibrate such that the line will wrap at the tip. There is a problem of having poles rotate when placed in a pole holder, such that the line from the rotated pole now leaves the tip at an angle such that it is easy for the line to wrap and/or the rotation of the pole causes the wrap. There is a problem that when a pole is placed in a pole holder such that it cannot rotate, and then the boat makes a tight turn, the line from the pole which is unable to rotate (in order to compensate for the turn) now leaves at an disadvantageous angle again causing wraps.

Prior art tips all have significant disadvantages in that they do not provide an efficient means to prevent the line from wrapping around the tip since many of the prior innovations have tips that are flared to provide a means by which the line can wrap. Further, there is no efficient means disclosed in the prior art to facilitate the line being effectively cast out from the rod so that the casting is also improved. Therefore, there is a significant need to provide a tip for a fishing line which substantially reduces the possibility of the line wrapping around the tip and further facilitates casting performance.

### SUMMARY OF THE INVENTION

The present invention is a tip to be placed on a fishing rod. Conventional fishing rods usually terminate in an "eye" or "roller" end on the fishing pole. A more proper term for the end attachment on a pole is a "terminal guide" rather than an "eye". There are two basic shapes of terminal guides being used on modern fishing poles, the "eye" (with or without braces) and the "roller" guide or wheel. They are made in several sizes to fit various sizes and shapes of fishing poles, however, they follow the industry standard of 64ths of an inch, i.e. a number four is 4/64ths inch hollow. Sizes generally in Western Countries come in 3, 4, 5, 5 1/2, 6, 6 ½, 7, 7-1/2 , 8, 9, 10, 12, 14, 16 up to about 30. Different manufactures will have different tolerances of accuracy. A key innovation of the present invention is that it is conical (tapered) on the outside so that if the line did wrap around the tip, all that is necessary to get the line to unwrap is to hold the tip downward so gravity will unwrap the line as it peels off, or from centrifugal force if it is cast. The inside is hollow and shaped to fit the distal end of a fishing pole. Additionally, they are much thinner in cross section than all existing Terminal Guides that have an "eye" at the end. It is this "eye" (and its braces) on the normal tip that acts as a holder of the wraps. One of the things that makes the present invention tip unique is that it eliminates the raised "eye" and/or "rollers" on normal poles that acts as bumps or snags to hold the fishing line as it wraps. The innovative features of the present invention which facilitate no wrapping (or the unwrapping of the line if it is manually wrapped) are as follows:
(1) It just does not wrap because there is no snag or "eye" for line to catch on;
(2) Should it wrap (or be manually wrapped), it will unpeel or unravel from gravity by holding the rod pointed down;
(3) Should it wrap (or be manually wrapped), it will unpeel or unravel when the line is cast over head or cast to the side from the centripetal- centrifugal force from the pull of the line leaving the pole.

The length of the present invention varies per the size of the pole they will go on, but generally they are from 1 to 2 inches long (some slightly longer, some will be made 3-4 inches long to be used when the end of a pole has accidentally been cut or broken off from a door closing on it, etc, and it is desired to restore the pole to its original length, and/or when it is desired to add a few inches onto a short pole), however the average length is about one half to one and one half inchs. They can be sold separately or used in the original manufacture of poles. They can be made of high-grade plastic or smooth polished or coated metal. They are all conical (tapered) on the outside with a hollow inside that allows the tip of the pole to be inserted (attached), typically with glue or epoxy as is the standard of the industry.

It is an object of the present invention to provide a fishing rod tip and guide of such form that it allows the free movement of the fishing line and avoids the tangling and knotting of the fishing line on the rod tip. It is another object of the present invention to provide a line guide which will be effective for guiding the line with minimum danger of tangling or wrapping of the line on the tip, and which is attached to the fishing rod and designed in such a manner that it will not break.

It is another object of the present invention to provide a guide that while it is effective to guide the fishing line to the end of a pole in an improved manner, that it also be of a lesser diameter, cheaper to manufacture, reduce friction to an absolute minimum, increase heat dissipation to a maximum, than all of the guides that are disclosed in the prior art. Also, this guide is much more difficult to accidentally break and/or to break off, such as when the braces for a normal eye un-weld or are broken, and/or the eye itself is broken off when it becomes snagged. Normal eyes when caught or trapped can actually cause the fiberglass tip of the pole to break off due to torque. This cannot happen with these eyes, as there is no raised eye, raised braces and there is no projection, flare or bulb to catch or trap by this tip. As stated elsewhere, these poles will store in a narrow locker much more easily than any of the prior art. This tip will also almost completely prevent another very annoying and very frequent occurrence with normal eyes. This happens when line is reeled in a little too much and the hook, swivel or weight (etc), which are thin and fit inside the normal eye, get caught on the eye. In other words, if you reel in line so that the hook gets partially pulled into (through) the eye, the hook is now snagged on the eye and/or its braces, requiring the tip of the pole to be brought into arms length to undo the snag. Per the narrow channel in these tip guides this is almost if not totally impossible.

It is a further object of the present invention to provide a tip for a fishing rod comprising an end or tip guide for a line carried along the length rod, which tip is designed as to measurably reduce the possibility of entanglement or wrapping of the line on the rod tip, and will further provide more efficient performance during casting or reeling in the line.

It is an object of the present invention to provide a generally improved rod tip so designed as to eliminate the deficiencies of conventional tips, by eliminating or at least measurably reducing the possibility of line entanglement, while at the same time facilitating a smooth paying out or reeling in of the line through the tip during regular use of the rod and reel.

It is another object of the present invention to provide a fishing line tip which is so shaped that when the line does become wound around the rod adjacent the tip, the line can be unwound or untangled with ease, by simply pulling on the line at any location along the length of the rod, the shape of the tip being such that the line will slip off the rod tip, responsive to either said pull by the user or alternatively, responsive to holding the line tip in a downward position so that the line will be removed from the tip by gravity, or by centrifugal force (pull) of the line leaving when it is cast out.

It is another object of the present invention to provide a tip for a fishing rod which will provide a more efficient performance during regular fishing operations such as the playing out of the line and the reeling in of the line.

It is another object of the present invention to provide a tip for a fishing rod which is designed to be capable of being manufactured at low cost from light non-corrosive materials, and can be embodied in otherwise conventional fishing rods with a minimum of difficulty. These tips need no welding such as for the braces on normal eyes. They also do not have moving parts such as the wheel which can bind and/or screws which can fall out on roller guide tips.

It is another object of the present invention to provide a tip for a fishing rod which can either be created as an original equipment attachment to the rod itself or which can be attached onto existing fishing rods as an aftermarket product by removing the end eye of the fishing rod and replacing it with the present invention tip.

It is a further object of the present invention to provide a tip for a fishing rod which is designed in a manner such that the opening through which the fishing line will enter the tip is slightly raised and thereafter, the opening within the tip is of an expanded nature so that the line can smoothly move within the tip both while the line is being played out during casting and while it is being reeled in including after a fish has been caught.

It is also an object of the present invention to provide a multiplicity of sizes and shapes of the present invention to accommodate different size fishing rods for both fresh water fishing and deep sea salt water fishing.

It is an additional object of the present invention to provide a means to facilitate an interchangeable tip for a fishing rod so that a fisherman can have a set of different tips and can easily unscrew or unthread one tip and replace it by easily threading a second tip onto the rod.

Further novel features and other objects of the present invention will become apparent from the following detailed description, discussion and the appended claims, taken in conjunction with the drawings.

### BRIEF DESCRIPTION OF THE DRAWINGS

Referring particularly to the drawings for the purpose of illustration only and not limitation, there is illustrated:
FIG. 1 is a perspective view of the preferred embodiment of the present invention fishing rod tip with the interior channel to accommodate the fishing line shown in dashed lines;
FIG. 2 is a cross-sectional view taken along line 2-2 of FIG. 1;
FIG. 3 is a cross-sectional view taken along line 3-3 of FIG. 1
FIG. 4 is a cross-sectional view taken along line 4-4 of FIG. 1 to show the opening of the channel;
FIG. 5 is a cross-sectional view taken along line 5-5 of FIG. 1;
FIG. 6 is a cross-sectional view taken along line 6-6 of FIG. 1;
FIG. 7 is a cross-sectional view taken along line 7-7 of FIG. 1;
FIG. 8 is a perspective view of a first alternative embodiment of the present invention fishing rod tip with the interior channel to accommodate the fishing line shown in dashed lines and illustrating a downwardly arched end;
FIG. 9 is a cross-sectional view taken along line 9-9 of FIG. 8;
FIG. 10 is a cross-sectional view taken along line 10-10 of FIG. 8;
FIG. 11 is a cross-sectional view taken along line 11-11 of FIG. 8 to show the opening of the channel;
FIG. 12 is a cross-sectional view taken along line 12-12 of FIG. 8;
FIG. 13 is a cross-sectional view taken along line 13-13 of FIG. 8;
FIG. 14 is a cross-sectional view taken along line 14-14 of FIG. 8;
FIG. 15 is a perspective view of a second alternative embodiment of the present invention fishing rod tip with an interior chamber to accommodate the fishing line;
FIG. 16 is a cross-sectional view taken along line 16-16 of FIG. 15;
FIG. 17 is a cross-sectional view taken along line 17-17 of FIG. 15;
FIG. 18 is a cross-sectional view taken along line 18-18 of FIG. 15 to show the opening of the channel;
FIG. 19 is a cross-sectional view taken along line 19-19 of FIG. 15;
FIG. 20 is a cross-sectional view taken along line 20-20 of FIG. 15;
FIG. 21 is a cross-sectional view taken along line 21-21 of FIG. 15;
FIG. 22 is an exploded perspective view of a third alternative embodiment of the present invention fishing rod tip illustrating a threaded base member which will be attached to the end of a fishing rod and internal threads in the tip to be removably threaded onto the threads of the base member to facilitate interchangeable tips; and
FIG. 23 is an illustration of an interchangeable roller tip.

### DETAILED DESCRIPTION OF THE PREFERRED EMBODIMENTS

Although specific embodiments of the present invention will now be described with reference to the drawings, it should be understood that such embodiments are by way of example only and merely illustrative of but a small number of the many possible specific embodiments which can represent applications of the principles of the present invention. Various changes and modifications obvious to one skilled in the art to which the present invention pertains are deemed to be within the spirit, scope and contemplation of the present invention as further defined in the appended claims.

The present invention is a tip to be attached onto the end of the fishing pole. In a first embodiment of the present invention the tip is permanently attached to the end of the fishing pole by either being cemented or glued in place. Additionally or alternatively, the tip can be further secured to the fishing pole by having flanges which facilitate wrapping or heat shrink onto the end of the fishing pole. In other words, in addition to having epoxy or resin permanently attach the tip to the fishing pole, the tip can also be further attached by a wrapping mechanism. Most of these tips will be made without flanges, as they are not necessary in most cases.

In an alternative embodiment, the present invention includes an attachment having a threaded end which is permanently attached to the tip of the fishing pole and thereafter, the removable tip can have a mating threaded surface so that a multiplicity of different tips can be respectively threaded onto the threaded end of the attachment.

The present invention tip is designed to replace the usual "eye" and/or "roller" end on the fishing pole. A more proper term for the end attachment on the pole is the "Terminal Guide" rather than an "eye". They are made in several sizes and configurations to fit various sizes and shapes of fishing poles, however, they follow the industry standard of 64ths of an inch, i.e. a number four is 4/64ths inch hollow. They are conical (tapered) on the outside so that if the line did wrap around them, all that is necessary to get the line to unwrap is to hold the tip downward so gravity will unwrap the line as it peels off. While the tapered-conical shape is the ideal, these new tips could be pipe shaped (cylindrical) or very, very slightly flared at the end and they would still be a significant improvement over all of the prior and existing art, however, to state it again, the conical-tapered shape is the more efficient design shape. Within the scope of this patent, the cylindrical shape or very, very slightly flared and/or wider at the end shape are innovative features of the present invention.

The inside of the present invention tip is hollow and shaped to fit the distal end of a fishing pole. Additionally, they are much thinner in cross section than all existing Terminal Guides that have an "eye" at the end. It is this "eye" (and its braces and/or the bulge in a roller guide) on the normal tip that acts as a holder of the wraps. One of the things that makes the present invention tip unique is that it eliminates the raised "eye" and/or "rollers" on normal poles that acts as bumps or snags to hold the fishing line as it wraps. In all descriptions of this patent, and including the figures, it should be understood that the thickness of the material used to form the hollow for the pole to fit into is as thin as it possible without sacrificing strength. This is easily attainable with modern stainless steel (coated or un-coated) or high quality plastic. The thinness is needed so that the tip when attached gives a smooth surface between the tip and the pole itself.

The length varies per the size of the pole they will go on, but generally they are from 1 to 2 inches long (some slightly longer), however the average length is about one half to one and one half inches. They can be sold separately or used in the original manufacture of poles.

The present invention can be made of high-grade plastic or smooth polished or coated metal. They are all conical (tapered) on the outside with a hollow inside that allows the tip of the pole to be inserted (attached), typically with glue or epoxy as is the standard of the industry.

In an alternative improvement to the present invention, some of the tips will have a thickened middle that allows the top (not the sides or bottom) to be about one tenth to one thirteenth of an inch thicker to accommodate the fishing line entry hole. This extra thickness is not absolutely necessary (but is desirable) as the flat non-raised tubular shape also works. The 1/10 to 1/13 extra thickness allows the entry hole to be slightly elevated so that the line can enter it without rubbing on surface below. The 1/10 to 1/13 of an inch is small enough so that it does not defeat the concept of the conical tapering and is only thicker on the top including the sides and bottom can be tapered to compensate. Some models have one or two small flanges, with very thin groves on the outside of the flange. The flanges are somewhat flexible so they are easily bent (or compressed) to seat next to the shaft of the fishing pole. The flange can be used to give greater surface for attaching the tip by wrapping and/or by heat shrink tubing. The thin grooves on the outside help hold wrapping or heat shrink. These flanges would be wrapped in line of various colors in the usual manner typical of the industry for attaching eyes to poles. Again, most of these fishing tips will be made without a flange and/or flanges. The flanges are used only in special circumstances per the needs of individual manufactures, the type of material used to make the guide, the physical characteristics of the tip of the pole they are being attached onto, etc.

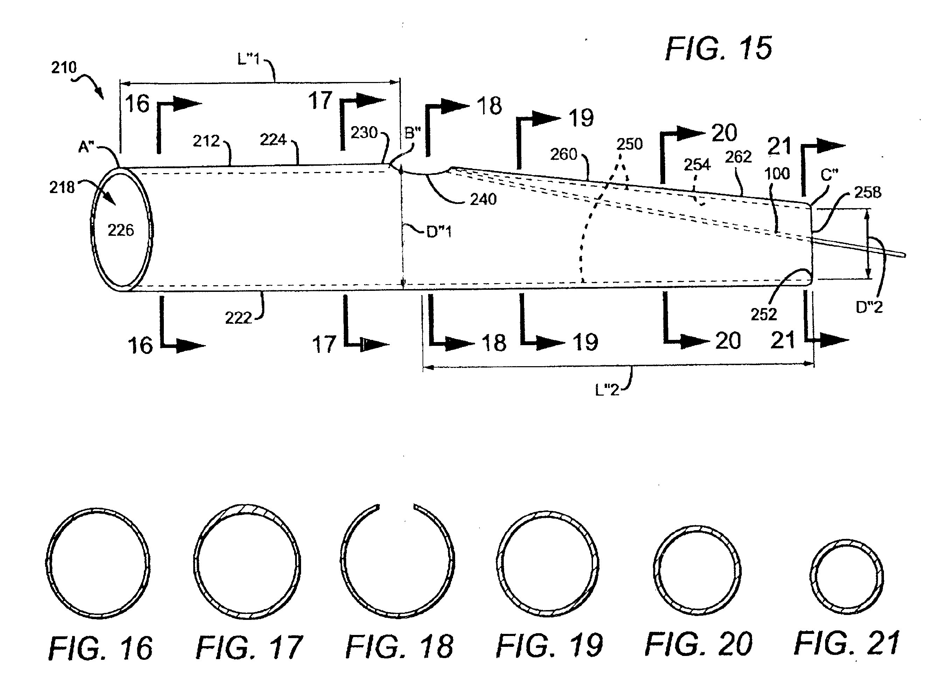

In addition to the hollow inside for the pole, there is a smooth bore inside channel that allows fishing line (of various sizes) to travel through the fishing tip. These channels start about in the middle of the present invention fishing pole tip, and traverse toward the distal end, where they exit in a round donut shaped hole. In most cases the channel starts just beyond where the inserted fishing pole ends. On the small (thin) sizes of the fishing tips, there is no channel, or almost no channel, it is just hollow inside as illustrated in Figures 15. The channel for the line is the tubular shaped hollow below the entry hole that extends to the distal tip. The entry hole of the channel is round or transversely oval, but takes on a more longitudinal oval shape if it is cast into a conical slope caused by the 1/10th-1/13th extra thickness.

The entry hole is as large as possible without significantly decreasing the strength of the tip so that it could be bent or broken. As the channels (in those that have it) travel through the fishing tip, the diameter of the channel gradually and/or proportionally increases until it exits at the distal tip. The shape of the channel helps reduce friction. In some cases the channel is lined with a thin layer of antifriction and/or heat dissipation material, such as Teflon®, aluminum oxide, silicon oxide, carbide etc. The fishing line is to be threaded through this channel. On the tip, the distal lip of the channel (or the hollow if there is no channel) is rounded, smooth and polished and is flared inward (smooth like the inside of a donut hole) so as to again reduce friction and to allow less strain on the fishing line.

On the small sizes that are hollow there is not room for a flare (see Figure 15), so instead it is just smooth and rounded (as stated above) to avoid line friction. Some models of the fishing tip have a 5-20 degree downward pointing arc at the distal 1/3 to ½. Among other things, this arc allows the line to leave the tip directly pointing at the water when the pole is held by a fisherman in a raised manner. These arc shape tips can be replacements for the roller wheel guides as discussed below.

The entry hole to the channel (in the larger sizes) starts in or just distally beyond a slightly depressed (or flattened) area of the fishing tip. This depressed or flattened area allows a larger fishing line entry hole without increasing the fishing tip diameter, and also allows a straighter path to (into) the channel and at the same time avoids friction of the fishing line on the surface below. The combination of a depressed or flattened area along with raising the entry hole 1/10 - 1/13 of an inch, both reduce friction and in combination are novel. The shapes as described above, besides preventing wraps also allow for longer and more accurate casting. This is in part due to the fact that the line exits in a straighter line than it would through a normal guide. In a normal guide the line can flop around so that it is (when it is cast) on the top, bottom, right or left side of the terminal eye. Per where it is, it will tend to go in that direction.

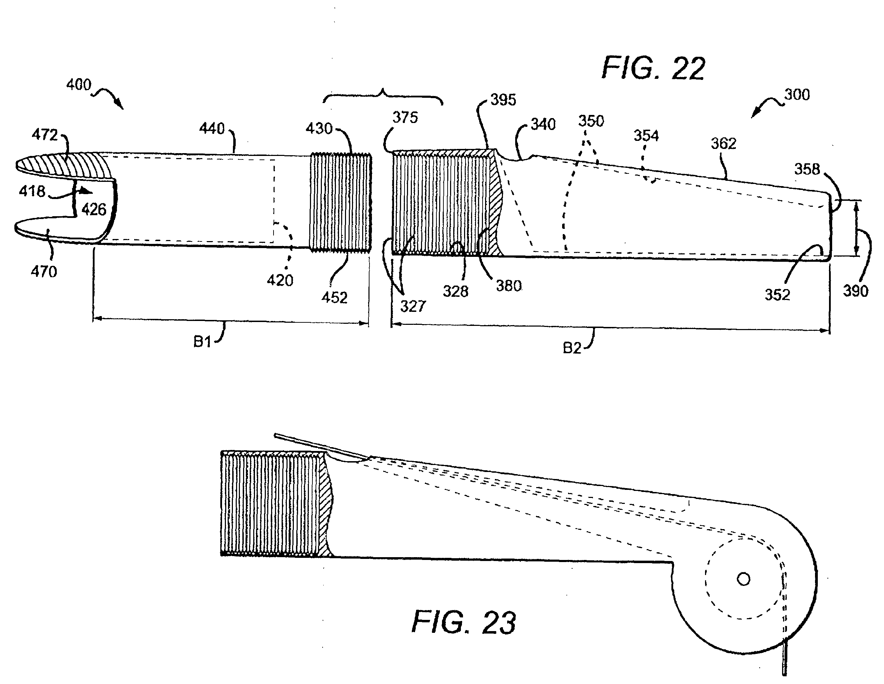

As discussed above, there is another alternative method of attachment of the present invention fishing tip which is a threaded member. There is a base that is hollow on one end and the pole is inserted into and permanently attached to this base. The other end of the base is finely threaded on the outside to allow the distal tip to be screwed on (see Figure 22). The screw-on tip that is to be attached has matching threads on the inside so it can be screwed onto and over the base. This allows various sizes and shapes of Terminal Guide tips to be screwed on, i.e. the terminal tips that are interchangeable. This interchangeable concept is novel. Some tips will have a very wide channel and entry hole so as to allow a knot to pass through. When screwed together they tightly fit with the overlapping part of the distal tip fitting closely to the body of the base, and due to the thinness of the material, there is no hub or surface to snag the line or collect dirt. They are manufactured so that when screwed on tightly the threads do not interfere (block) with the entry hole. In all cases, the threads are arranged so that when tightly screwed on the entry hole is in line with the other guides on the pole. One of the unique features is that no other fishing pole allows changing of the tips (terminal eye or guide) without ungluing and/or cutting off the old tip eye or guide. The advantage in having changeable Terminal Guides is that the various shaped and sized guides can be used for different types of fish or fishing requirements. Screw-on normal eyes and screw-on normal roller guides are possible, and again this is novel. By having an interchangeable tip, this would allow someone to take fewer poles on a fishing trip and be able to change the type of tip per any change in the type of fishing. The part of a pole that frequently breaks is the distal eye (like when slammed in a self closing gate when you carry the pole through). Being able to rapidly change the tip of a pole in the field is a distinct advantage. Additionally, these tips have nothing at the end to snag on the cyclone links of the gates and will just slide through.

In order to facilitate additional holding power area, there can be a grooved area in the base that lines up with the grooved area in the tip that has been screwed on, and a retaining pin (about paper clip thickness) is inserted into the grooved area. This pin would snap into place yet be easily removable. This would be very similar to what is called a "Woodruff Key". The Woodruff Key can be used with the present invention (if the size was adjusted) to prevent the distal guide from unscrewing and/or from becoming loose. Alternatively, about the same thing as the retaining pin can be accomplished with one wrap of a water proof tape, such as the standard electrical tape. The screw-on tip conforms to other specifications described above, i.e. they are tapered, they have an inside channel, they have an entry hole, etc..

Besides preventing the wraps, there are many other advantages to the present invention guide. These tips because of their shape allow for significantly longer casting for several reasons including by reducing line friction and by allowing the line to leave via a narrow channel which prevents the wobble that can occur when the line slaps around the inner circumference of a normal end eye. The present invention was able to achieve approximately twenty-five percent longer casts using these guides, both on open faced spinning reels and normal reels. This occurred using a variety of poles of different thickness and length.

The present invention does not reduce casting distance, because of the line leaving through a channel it tends to go straighter in the direction it was aimed at. In some cases the tips will be coated inside as described above, however due to their shape and heat dissipation surfaces the coating (for anti-friction, heat dissipation and/or tougher/stronger than metal) is not needed excepting only for the very heavy-long fighting fish and/or very abrasive types of fishing lines. They also help prevent breaking fishing lines as they disburse heat better and the line is stressed less. When a normal eye is used the line frequently needs to make a sharp turn or bend over the rim of the normal eye. The prolonged wobbling or rubbing of the line at this sharp turn can be abrasive. With the present invention tips the sharpness of the turn is reduced as the line more gradually arcs (rather than sharply bends), wherein the arc is due to the shape of the channel and the smooth shape of the exit hole. All of the advantages of the line leaving the distal fishing tip guide are also true in reverse, i.e. when line is reeled in the same advantages are present. Another advantage of these tips is that they reduce the need for the roller wheel tip guides typical of heavy-duty poles. These roller wheel tip guides are expensive and very prone to binding (so the wheel won't turn) especially when dirty or when corrosion occurs on their axle and/or screws that hold the axle. In addition, screws are prone to backing out in some cases. They are also wider than the tip of the pole so they act to hold wraps. The larger sizes of these tip guides do not have those problems while at the same time they significantly have all the advantages and mechanical leverage of a wheel on a roller guide. To a minor extent the tips also somewhat help prevent backlash due to their shape and the way the line leaves the pole when it is cast. This is true for several reasons, however the normal methods of backlash prevention (using your thumb) should be observed. Another distinct advantage to these tips is the ability of the user to store them in a narrow locker. The normal tip gets caught or snags on various objects as the pole is slid in or out. The present invention tip reduces this by having a smooth tip so that nothing will be caught.

Having described the present invention in its various alternative embodiments above, reference is now made to the Figures which disclose in detail the various embodiments of the present invention.

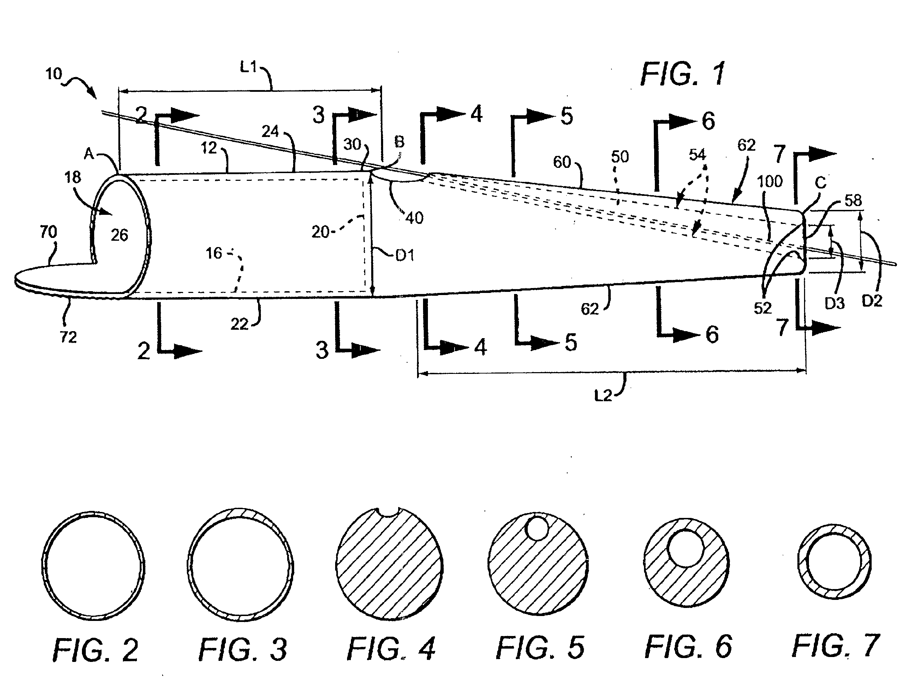

Referring to Figures 1 through 7 there is illustrated the preferred embodiment of the present invention. Figure 1 is a perspective view of the preferred embodiment of the present invention fishing rod tip with the interior channel to accommodate the fishing line shown in dashed lines. Figure 2 is a cross-sectional view taken along line 2-2 of Figure 1. Figure 3 is a cross-sectional view taken along line 3-3 of Figure 1. Figure 4 is a cross-sectional view taken along line 4-4 of Figure 1 to show the opening of the channel. Figure 5 is a cross-sectional view taken along line 5-5 of Figure 1. Figure 6 is a cross-sectional view taken along line 6-6 of Figure 1. Figure 7 is a cross-sectional view taken along line 7-7 of Figure 1.

The fishing rod tip 10 comprises a generally cylindrical body at one section which tapers to a conical designed exterior shape on the second section. The first cylindrical section 12 of fishing rod tip 10 comprises a proximal end L1 having a thin sidewall 16 and an opening 18. The opening 18 is designed to accommodate the end of a fishing rod. When the present invention fishing rod tip is used with original equipment manufacture, the end of the fishing rod can be designed so that its diameter accommodates the diameter of the opening 18 (or visa versa, i.e. the tip can be changed). If sold as an aftermarket product to be attached onto existing fishing rods, then the end of the fishing rod which contains the conventional eye has that eye removed by ungluing it and/or cutting its threads or heat shrink so that it will be removed in the manner standard of the industry. In extreme (and specific) cases the tip of the rod could be cut off or sawed off so that only a cylindrical portion remains at the tip end of the fishing rod to accommodate the present invention fishing rod tip. Example of extreme cases are when the end of the rod is damaged, or when it is impossible to remove the old tip as described above. The size of the opening 18 follows the sizes of fishing pole diameters 3 through 30. It increases approximately 1/64 of an inch for each increase in size. For example, a size 16 would be 16/64ths or 1/4 inch in diameter, a size 8 would be 8/64th or 1/8 inch in diameter. Therefore, the diameter 18 is designed to accommodate the smallest diameter fishing rod tip which is three 64ths to the largest diameter fishing rod tip which is thirty 64^{th}s. The first section 12 is generally cylindrical and the interior diameter 18 is also generally cylindrical in order to accommodate the diameter of the fishing rod tip. After the initial length L1 of the first section, the interior ends at 20 as illustrated by the dashed lines 20 in Figure 1. Where the interior ends it forms a barrier ("barrier") that prevents the rod from being inserted too deeply, and/or from glue occluding the entry hole. (In fig. 15 the interior does not end but is continuous with the tip).

The length L1 will vary depending upon the general size of the fishing pole. For fishing pole sizes 3 to 7, the length L1 is approximately ½". For fishing pole sizes 8 through 12, the length is approximately .75". For fishing pole sizes 14 through 30, the length L1 is approximately one inch to one and one half inches. While it is possible for the exterior surface 22 of the entire first section 12 to be generally cylindrical, in the preferred embodiment, the upper lengthwise edge 24 increases on a slight angular rise so that the top lengthwise exterior edge 24 progresses at an upward angle from point A to point B so that the thickness of the wall at point B is approximately 1/10" to 1/13" thicker than the wall thickness at point A. The tip of the fishing pole is inserted through opening 18 and extends through the length of interior cylindrical channel 26 and can be inserted all the way up to the area where the opening ends at dashed line 20. In order to maintain the tip of the fishing pole within the fishing rod tip, glue, epoxy or other adhesive is attached to the interior wall of the chamber 26 or to the exterior surface of the end of the fishing pole so that when it is inserted through opening 18 into chamber 26, it will be adhered to the walls of the interior chamber 26. The cross-sectional views of Figure 2 and Figure 3 show the increase in the wall thickness 24 as it rises from point A at the proximal end of the fishing rod tip to point B at the approximate midpoint of the fishing rod tip. In some of the descriptions herein, and in the drawings and figures included, we have described and shown the tip as if it had two separate chambers (excepting for the screw on tips). These two chambers (one for the tip of the pole and one for the fishing line channel) are shown and described as having a barrier or solid portion between and separating them ("barrier"), which is the material (the tips are made of) beyond 20 in Fig. 1. This barrier is not absolutely necessary, however it does give extra strength to the tips. These tips, especially the thin ones (small sizes) can be made with one continuous internal hollow chamber (as shown in Fig. 15). When the single chamber (i.e. continuous-chamber) tips are attached, all that is necessary is to not have the pole slide in too far so as to block the line entry hole (240 on Fig. 15). To help prevent someone from sliding the tip on too far, there could be a small hub (or slightly thicker area) on the inside so that when the tip of the pole hits the hub (or thicker area) it is prevented from sliding further. While not illustrated, it will be appreciated that the hub is at least one small interior indentation which replaces wall 20. In this case it will be necessary to be careful not to have glue or epoxy flow and block the entry hole or exit channel. A claimed innovation is this single chamber hollow inside shape as an additional novelty when it is used with the other novelty claims and designs described herein.

After the midpoint, on the upper surface of the fishing rod tip 10 is an opening 40 to accommodate the fishing line. The opening 40 leads to an interior channel 50 that extends the length of second section 60 (L2) of fishing rod tip 10. Second section 60 extends from point B to point C as illustrated in Figure 1. At the approximate location 30 the area in front of the opening 40 is slightly depressed and/or is a flattened area (in the small sizes it will be a flattened area, as the thinness of the material, metal or plastic, would prevent a depression). In the larger sizes a depression and/or a flattened area can be used as the thickness of the material could accommodate it. It is a common practice among laymen that when attaching a new tip, if the tip is slightly too large, that it be tapped with a hammer so as to slightly reduce its diameter so that it will fit snuggly onto the fishing pole. Beyond the location B, the diameter of the fishing rod tip then tapers toward the distal tip at point C so that it is reduced to about fifty percent to eighty percent of the diameter D¹ of the fishing rod tip at point B. In other words, the diameter decreases toward the distal tip and loses about 20-50% of its diameter at D1.

To reduce friction, the inside 52 of the tip of channel 50 is flared as shown to reduce friction. The shape of the channel 50 for the fishing line can vary from round to slightly oval. The diameter of the channel 50 increases proportionally with the increase in the tip sizes from three to thirty. In some cases, the interior wall 54 of the channel 50 is coated with material such as silicon oxide, aluminum oxide, carbide, hard alloy etc. in order to facilitate smooth action of the line against the interior wall 54. The exit diameter of the channel is D3 is approximately 125% to 150% greater than the diameter of the channel near or at the entry hole 40. The second section 60 is conical (tapered) on the outside wall 62 so that if the fishing line 100 did wrap around the wall, all that is necessary to get the line to unwrap is to hold the tip downward so gravity will unwrap the line and let it peel off. It is a fact that when line is in the water that there frequently is a pull or drag on the fishing line from the current, from the fishing weight, from the bait swimming, from the boat moving with the current etc. This pull or drag on the line in the present invention tip would automatically peel off any wraps should they occur.

The length L2 of second section 60 which is also approximately one-half the total length of the fishing rod tip varies in length depending upon the size of fishing pole with which the fishing rod tip is used. For sizes three through seven, the length L2 is approximately .5". For fishing pole sizes 8 through 12, the length L2 is approximately .75". For fishing pole sizes 14 through 30, the length L2 is approximately 3/4" to one inch. Therefore, the total length of the fishing rod tip from proximal end A to distal end C is approximately 1" to 2" depending upon the nature of the pole used. For pole sizes 3 through 7, the overall length is approximately 1". For pole sizes 8 through 12, the overall length is approximately one to 1.5 inches. For pole sizes 14 through 30, the overall length is approximately 2". The fishing line 100 which extends from the fishing pole reel through the other normal guides, then extends over surface 24 and enters opening 40 and then extends along interior channel 50 to the distal tip C. The 1/10" to 1/13" extra thickness of upper edge 24 as previously discussed allows the entry hole 40 to be slightly elevated so that the fishing line 100 can enter it without rubbing on the surface below. The 1/10" to 1/13" is small enough so that it does not defeat the concept of conical tapering, and as stated, is only thicker on the top. The sides and the bottom can be tapered to compensate. While this increased extra thickness of 1/10" to 1/13" is not absolutely necessary as a flat non-raised tubular shape will also work, this extra thickness provides the benefit as just discussed. It should be noted that fishing line enters hole 40 at a downward angle caused by the normal proximal guides holding it up above the shaft of the pole. As a general rule in the industry, these normal guides decrease in size and height, as they are placed closer to the tip. In any case, they hold the line up so it does not rub on the pole, and in addition, they allow the line to enter the entry hole at an angle which reduces friction. As to where these normal eyes are placed and how far apart, in most cases this is dependent on the flexibility ("Action") of the pole.

The opening 58 at the distal tip of a fishing rod tip is a round donut-shaped hole (as much as is possible per the material (metal, plastic, etc.) thickness) as illustrated in Figure 7. In most cases the channel 50 starts at approximately the middle of the fishing rod tip 10 and traverses toward the distal end C, where the channel exits in a round donut-shaped hole 52. In most cases, the channel starts just beyond where the inserted fishing pole ends. The entry hole 40 of the channel 50 is round or transversely oval, but takes on a more longitudinally oval shape if it is cast into a conical slope. The entry hole 40 is as large as possible without significantly decreasing the strength of the tip so that it could be bent or broken. As the channel 50 travels through the fishing rod tip, the diameter of the channel gradually and/or proportionally increases until it exists at the distal tip C as illustrated through the dashed lines in Figure 1. The shape of the channel helps reduce friction. In some cases, the wall of the channel 50 is lined with a thin layer of anti-friction and/or heat dissipation material such as Teflon®, aluminum oxide, silicon oxide, carbide, etc. The fishing line 100 is to be threaded through this channel. At the distal tip C, the channel is flared (smooth-rounded) along its wall 52 so as to again reduce friction and to cause less strain on the fishing line.

As discussed, the entry hole 40 to the channel 50 starts in or just behind a slightly depressed (or flattened) area 30 on the upper surface 24. This depressed or flattened area 30 allows a larger fishing line entry hole without increasing the fishing tip diameter, and also allows a straighter path to the channel.

The shapes as discussed above, besides preventing wraps, also allow for longer and more accurate casting. This is in part due to the fact that the line exits in a straighter line than it would through a normal guide. In a normal guide the line can flop around so that it is on the top, bottom, right or left side of the terminal eye. The inventor, in practice casting with the present invention tips, was able to consistently cast down a narrow alley in a reasonably straight line a considerable distance. When the inventor changed to a normal tip (using the same pole and reel), the inventor frequently cast off to the side hitting the various garage doors.

The fishing rod tip 10 as illustrated in Figures 1 through 7 can be made of high grade plastic or smooth polished or coated metal.

One additional optional feature is to have at least one flange that is adjacent the opening 18 and which has score lines (on the outside) 72 on the flange(s) 70 to facilitate attachment to the fishing pole. In addition to having epoxy attach the fishing pole to the interior of the channel 26, the at least one (optional) flange or in some cases a multiplicity of flanges are attached around the fishing pole. When wrapped or heat shrink is applied the flanges will provide additional holding power onto the rod tip 10 (The exact size (width, length and thickness of the flange) is up to each individual manufacturer and will vary per the type of material they are made from. However, generally they are about ¼ to ½ inch long. In the case where there is only one flange it is on the bottom and is about ¼ to 1/3 of the circumference of the opening 26 for the pole and it is rounded to match the circumference of the pole. When there are two flanges, they are opposed top and bottom and are about ¼ the circumference of the hole for the pole, and again are rounded to match the circumference of the hole. The flanges are designed so that their ends are slightly thinner (i.e. tapered) than where they attach to the circumference, i.e. from the attachment at the circumference they get thinner toward the point where they end. This, among other advantages, gives them flexibility so they can be compressed to fit tightly against the sides of the fishing pole). The score lines (72 in fig. 1) around the outside of the flanges cause the fishing pole to adhere to the fishing rod tip 10 (or visa versa). It will be appreciated that the flanges could possibly take the place of the epoxy and adhesive and the fishing rod tip can be inserted into the channel 26 through opening 18 and then held in place by means of at least one or a multiplicity of flanges 70 being wrapped with conventional fishing pole wrapping or heat shrink wrapping. The flanges 70 have very thin grooves 72 on the outside of the flange. These thin grooves (for all flanges described herein) are optional, however they are preferred. Additionally, they are arranged like the steps on a ladder, i.e. parallel grove lines and are spaced about 1/16 - 1/8 inch apart.. The flanges are somewhat flexible so they are easily bent (or compressed) to seat next to the shaft of the fishing pole. The flange 70 can be used to give greater service for attaching the tip by wrapping and/or by heat shrink tubing. The thin grooves 72 on the outside of the flange 70 help to hold the wrapping or heat shrink. These flanges 70 can also be wrapped in line of various decorative colors in the usual manner typical of the industry for attaching eyes to poles.

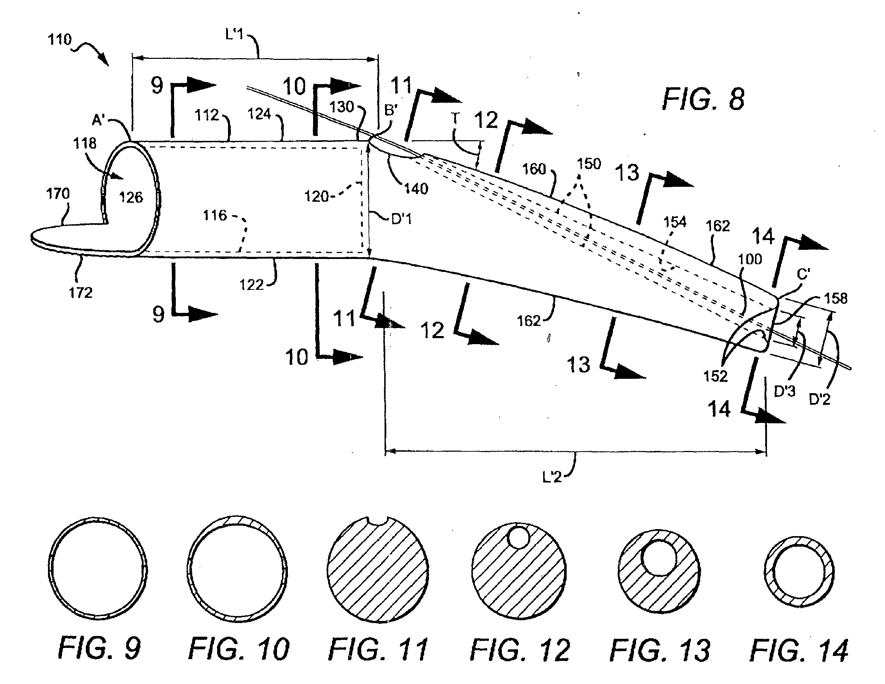

A second alternative embodiment of the present invention is illustrated in Figures 8 - 14. Figure 8 is a perspective view of a first alternative embodiment of the present invention fishing rod tip with the interior channel to accommodate the fishing line shown in dashed lines. Figure 9 is a cross-sectional view taken along line 9-9 of Figure 8. Figure 10 is a cross-sectional view taken along line 10-10 of Figure 8. Figure 11 is a cross-sectional view taken along line 11-11 of Figure 8 to show the beginning of the opening of the entry hole 140. Figure 12 is a cross-sectional view taken along line 12-12 of Figure 8. Figure 13 is a cross-sectional view taken along line 13-13 of Figure 8. Figure 14 is a cross-sectional view taken along line 14-14 of Figure 8.

The fishing rod tip 110 comprises a generally cylindrical body at one section which tapers to a conical designed exterior shape on the second section L'2. The first cylindrical section 112 (also L' 1) of fishing rod tip 110 comprises a proximal end L' 1 having a thin sidewall 116 and an opening 118. The opening 118 is designed to accommodate the end of a fishing rod. When the present invention fishing rod tip is used with original equipment manufacture, the end of the fishing rod can be designed so that its diameter accommodates the diameter of the opening 118. If sold as an aftermarket product to be attached onto existing fishing rods, then the old tip is removed per the standards of the industry (i.e. ungluing it and/or cutting the wrappings that hold it). The size of the opening 118 follows the sizes of fishing pole diameters 3 through 30. It increases approximately 1/64 of an inch for each increase in size. For example, a size 16 would be 16/64ths or 1/4 inch in diameter, a size 8 would be 8/64th or 1/8 inch in diameter. Therefore, the diameter 18 is designed to accommodate the smallest diameter fishing rod tip which is three 64ths to the largest diameter fishing rod tip which is about thirty 64^{th}s. The first section 112 is generally cylindrical and the interior diameter 118 is also generally cylindrical in order to accommodate the diameter of the fishing rod tip. The inside distal end of 118 is represented by the dashed line 120, i.e. the barrier that prevents the pole from being inserted too far, and/or from glue blocking the entry hole. In other words, in fig. 8, the tip is hollow to the left of 120 and is solid to the right of 120. (In Figure 15 there is no barrier). Having or not having a barrier does not effect the functionality of these tips. It is more dependent on the material to be used to make the tips and how the tips are made, i.e. cast, machined, stamped out etc. Cost of manufacturing is a major consideration. The exception to the above is that the small sizes due to the physical constraints of size and diameter will more than likely be made without a barrier.

The length L' will vary depending upon the general size of the fishing pole. For fishing pole sizes 3 to 7, the length L' 1 is approximately 0.5". For fishing pole sizes 8 through 12, the length L' 1 is approximately .75". For fishing pole sizes 14 through 30, the length L' is approximately one inch. While it is possible for the exterior surface 122 (of the 126 hollow) of the entire first section 112 to be generally cylindrical, in the preferred embodiment, the upper lengthwise edge 124 increases on a slight angular rise so that the top lengthwise exterior edge 124 progresses at an upward angle from point A¹ to point B¹ so that the thickness of the wall at point B¹ is approximately 1/10" to 1/13" thicker than the wall thickness at point At. In other words, L1 on the top only is thicker at B¹ than at A'. The tip of the fishing pole is inserted through opening 118 and extends through the length of interior cylindrical channel 126 and can be inserted all the way up to the area of the dashed line 120. The 120 line represents the barrier. In order to maintain the tip of the fishing pole within the fishing rod tip, glue, epoxy or other adhesive is attached to the interior wall of the channel 126 or to the exterior surface of the end of the fishing pole so that when it is inserted through opening 118 into chamber 126, it will be adhered to the walls of the interior chamber 126. The difference in the cross-sectional views of Figure 9 and Figure 10 show the increase in the wall thickness 124 as it rises from point A¹ at the proximal end of the fishing rod tip to point B¹

About the midpoint, on the upper surface of the fishing rod tip 110 is an opening 140 to accommodate the fishing line. The opening 140 leads to an interior channel 150 that extends the length of second section 160 (also L2) of fishing rod tip 110. The second section 160 extends from point B¹ to point C¹ as illustrated in Figure 8. At the location 130 of upper surface 124 immediately before the opening 140, the area in front of the opening 140 is slightly depressed or flattened to provide a more smooth transition for the fishing line to enter the opening. Beyond the location B¹, the diameter of the fishing rod tip then tapers toward the distal tip at point C¹ so that it is reduced to about eighty percent to fifty percent of the diameter D¹ 1. In other words, the diameter decreases toward the distal tip and loses 20-50% of its diameter D¹ 1. Therefore, the diameter D¹ 2 at the distal end of the fishing rod tip is less than the diameter D¹ 1. The amount of decrease in diameter is left up to individual manufactures per the flexibility and the location of the flexibility of a pole. The location of the flexibility concept in the industry is frequently referred to as "Action". Poles can be made with Extra Fast Action, Fast Action, Slow Action, etc. ("Action") of the pole they are making.

To reduce friction, the inside of the tip of channel 150 is flared (rounded/smooth/polished) at the distal tip to reduce friction. The shape of the channel 150 for the fishing line can vary from round to slightly oval. The diameter of the channel 150 increases proportionally with the increase in the tip sizes from three to thirty. In some cases, the interior wall 154 of the channel 150 is coated with material such as silicon oxide, aluminum oxide, carbide, hard alloy etc. in order to facilitate smooth action of the line against the interior wall 154. The exit diameter of the channel which is D¹3 is approximately 125% to 150% greater than the diameter of the channel near the entry hole 140. The reader needs to examine the walls 162 in Figure 8 carefully to see that they are arced. This is not apparent to the naked eye. If the reader lays down a straight edge along 162 on the top from the distal end of the entry opening 140 to the tip at C', or from the arrowhead at D'1 to the bottom of the tip, it can be determined that they are drawn in an arc and they are not straight lines. While this arc is not absolutely necessary, it does increase functionality for several reasons. The second section 160 (L2) is also conical (tapered) on the outside wall 162 so that if the fishing line 100 did wrap around the wall, all that is necessary to get the line to unwrap is to hold the tip downward so gravity will unwrap the line, or to cast it off using the centripetal pull of the line to unwrap it.

The length L2 of second section 160 which is approximately one-half to two thirds the total length of the fishing rod tip and it varies in length depending upon the size of fishing pole with which the fishing rod tip is used. For sizes 3 through 7, the length L¹ is approximately 0.5". For fishing pole sizes 8 through 112, the length L' 1 is approximately 0.75". For fishing pole sizes 14 through 30, the length L' 1 is approximately one to one and one half inches". Therefore, the total length of the fishing rod tip from proximal end A¹ to distal end C¹ is approximately 1" to 2" depending upon the nature of the pole used. For pole sizes three through seven, the overall length is approximately 1". For pole sizes eight through twelve, the overall length is approximately 1.5". For pole sizes 14 through 30, the overall length is approximately 1 ½ to 2". The fishing line 100 which extends from the fishing pole reel extends over surface 124 and enters opening 140 and then extends inside the (through) interior channel 150 to the distal tip C¹. The 1/10" to 1/13" extra thickness of upper edge 124 as previously discussed allows the entry hole 140 to be slightly elevated so that the fishing line 100 can enter it without rubbing on the surface below. The 1/10" to 1/13" is small enough so that it does not defeat the concept of conical tapering, and as stated, is only thicker on the top. The sides and the bottom can be tapered to compensate. While this increased extra thickness of 1/10" to 1/13" is not absolutely necessary as a flat non-raised tubular shape will also work, this extra thickness provides the benefit as just discussed.

The opening 158 at the distal tip of a fishing rod tip is a round donut-shaped hole as illustrated in Figure 8. In most cases the channel 150 starts at approximately the first one-third or the middle of the fishing rod tip 10 and traverses toward the distal end C¹, where the channel exits in a round donut-shaped hole. In most cases, the channel starts just beyond where the inserted fishing pole ends. As stated, in some cases (especially the smaller size tips) there will not be a molded wall or barrier (#20 in Fig. 1 and #120 in fig. 8) between that hollow portion that the pole is inserted into and the portion that has the line entry hole and channel. Fig. 15 shows a tip without a barrier, i.e. there is a single hollow channel that starts to taper just beyond the entry hole. In this case the distal tip of the fiberglass pole (when inserted into the tip) will form the barrier. The entry hole 140 of the channel 150 of fig. 8 is round or transversely oval, but takes on a more longitudinally oval shape if it is cast into a conical slope. The entry hole 140 is as large as possible without significantly decreasing the strength of the tip so that it could be bent or broken. Also, the hole size will vary slightly per the physical characteristics of the material from which the tips are made, and/or if it is to be coated, etc. As the channel 150 travels through the fishing rod tip, the diameter of the channel gradually and/or proportionally increases until it exists at the distal tip C^{1.} The shape of the channel helps reduce friction. In some cases, the wall of the channel 150 is lined with a thin layer of anti-friction and/or head dissipation material such as Teflon®, aluminum oxide, silicon oxide, carbide, etc. The fishing line 100 is to be threaded through this channel. At the distal tip C¹, the channel is flared (smooth, coated, rounded, polished etc) along its wall 152 so as to again reduce friction and to allow less strain on the fishing line.

As discussed, the entry hole 140 to the channel 150 starts in or just behind a slightly depressed and/or flattened area 130 on the upper surface 124. This depressed area 130 allows a larger fishing line entry hole without increasing the fishing tip diameter, and also allows a straighter path to the channel. Again, the depressed or flattened area in combination with the 1/10 to 1/13 inch extra thickness (which causes extra height) allows the line to enter the hole with less friction and this is novel.

The shapes as discussed above, besides preventing wraps, also allows for longer and more accurate casting. This is in part due to the fact that the line exits in a straighter line than it would through a normal guide. In a normal guide the line can flop around so that it is on the top, bottom, right or left side of the terminal eye.

The fishing rod tip 110 as illustrated in Figures 8 through 14 can be made of high grade plastic or smooth polished or coated metal.

One additional optional feature is to have at a flange that is adjacent the opening 118 on Figure 8 and which has score lines 172 on the flange(s) 170 to facilitate attachment to the fishing pole. In addition to having epoxy attach the fishing pole to the interior of the channel 126, the flange and in a preferred embodiment, a multiplicity of flanges, attached around the fishing pole are wrapped or heat shrinked in place. The score lines on the outside of the flanges help hold the wrapping thread or heat shrink in place so that the fishing pole guide will adhere to the tip of the fishing rod. It will be appreciated, though not likely except in unusual circumstances, that the flanges could possibly take the place of the epoxy and adhesive and the fishing rod tip can be inserted into the channel 126 through opening 118 and then held in place by means of at least one or a multiplicity of flanges 170 being wrapped with conventional fishing pole wrapping or shrink wrapping. The flanges 170 have very thin grooves 172 on the outside of the flange. The flanges are somewhat flexible so they are easily bent (or compressed) to seat next to the shaft of the fishing pole. The flange 170 can be used to give greater service for attaching the tip by wrapping and/or by heat shrink tubing. The thin grooves 172 on the outside of the flange 170 help to hold the wrapping or heat shrink. These flanges 170 will be wrapped in line of various colors in the usual manner typical of the industry for attaching eyes to poles.

The significant difference between the first alternative embodiment and the preferred embodiment of the present invention is that the second section 160 of fishing rod tip 110 (i.e. the L'2) is aimed-arced downwardly from five degrees to 45 degrees in a downwardly pointing arc as illustrated in Figure 8. (Angle T is five degrees to 45 degrees in a downward curved arc). Among other things, this arc allows the line to leave the tip pointing toward the water when the pole is held by a fisherman in a raised manner. This is also somewhat true for the arc tip when the pole is placed in a pole holder, i.e. its tip (hence the fishing line) points toward the water. These arc-shaped tips can be replacements for the roller wheel guides which are used in conventional fishing rods. This is because the surface shape of an arc is equivalent to the round shape of a wheel. It is a fact that the wheel in roller guides is grooved so as to hold the line in place and away from the edge of the wheel where it could get caught between the sides of the wheel and one of the two side frames that holds the wheel. This happens frequently when the screws that hold the wheel get loose and a gap forms. In my design the channel inside is round and acts as the groove in the roller wheel. This is novel. Additionally, poles with roller guides are frequently used to troll and are prone to wraps when the lure jumps or bounces on waves that causes the tip of the pole to vibrate. This wrap prevents the fish from peeling or pulling line off the reel. This causes the line to break (so you lose the fish), and/or makes it impossible to reel in the fish until the wrap(s) are manually undone. These present invention tips solve that problem. Another annoying thing about roller wheels is that when certain poles (i.e. without gimbal grooves in the butt) are placed in a pole holder they frequently tends to rotate on their axis. This rotation causes the roller guide to also rotate so that line leaves the roller guide not in the groove in the wheel, and/or at a diagonal angle to the wheel. Sometime the axial rotation (of the pole and guide) is so extreme that it causes the wrap. The shape, design and functionality of these present invention tips do not have these problems. To prevent this axial rotation of a rod in a rod holder, the industry standard today (on the more expensive poles) has placed two notches or grooves (at a 90 degree angle to each other) in the butt of a pole. These are occasionally called Gimbals and/or Gimbal Notches and/or the pole in "Gimbaled". Typically these notches are covered with a removable rubber cap (which is easily lost) when the notches are not needed. To accommodate these notches, there are special pole holders that have a bar in the bottom that engages the notch. This prevents the axial rotation. Besides causing the pole to be more expensive, the rod holders with the bottom bar are also more expensive. Some rod holders do not have the bar, which makes the Gimbal grooves on the pole butt unusable. This present invention solves that problem for several reasons, including the line can leave the tip of the pole in a 360 degree circle without tangling or wrapping. In other words, it does not make any difference which way the rod tip is pointing in the present invention tips. In practicing with this present invention tip the inventor was able to swing the line in multiple circles over his head (like a lariat), then easily cast or retrieve it. One of the problems in trolling with a pole in a fixed position (i.e. using the Gimbals and bar in a rod holder) is that when the boat makes a tight turn the rod cannot rotate to compensate. Therefore the line is pulled off the roller at an inefficient and annoying diagonal angle, and often wraps. These present invention tips solve that problem. It should be noted that the Gimbals on a rod allow it only to be seated in 90-degree sequences, i.e. four positions. When trolling and using outriggers, the rod has to be placed on one of the four possible positions, and typically this is aft. When the line is hooked up to the outrigger's holding clips, it leaves the pole in an extreme upward direction, either very much to the right or left depending which side of boat the rod is being used. When a fish strikes, the line is released from the outrigger and now trails behind the boat. The line on occasion gets wrapped on the tip of the pole after it is released from the outrigger for several reasons, including that it has had to change direction at least 90 degrees because the pole is generally aimed toward the rear of the boat (aft) when it was set up in the holder. There are a number of other reasons for the wrap when released from an outrigger, such as the effect of wind blowing on the line, fish strikes that don't cause a release from the outrigger, etc. These present invention tips solves those problems.

The present invention tip should not be any more expensive to manufacture than the existing guides or rollers, and in fact, in most cases they will be cheaper. Using them will also (to the extent described above) eliminate the extra cost (and inconvenience) of the pole Gimbal notches and the bar in the rod holder. Gimbal notches will still be frequently (or occasionally) needed on poles that are held and are to be placed in the cup of a fisherman's belt.

Therefore, the first alternative embodiment of the present invention includes the optional feature of the at least one or multiplicity of flanges in addition to all the other features of the preferred embodiment but has as its additional optional feature, the downwardly tipped angle of the second section 160 so that the downwardly pointing arc at the distal two-thirds to one-half is at an angle T between five degrees and 45 degrees so that the fishing line 100 leaves the tip pointing toward the water. This also dissipates heat better at the same time as it reduces friction. In other words, when the line is pointing at the water, it goes in or out without continuously rubbing over the bottom circumference of the rim of a normal eye. When it does rub over the rim of a normal eye, the rubbing is always on the same part, i.e. the bottom part of the line in contact with the rim (assuming the pole is held straight and not rotated).

The second alternative embodiment of the present invention is illustrated in Figures 15 through 21. This second alternative embodiment is comparable to the preferred embodiment of the present invention except that it is used for small thin sizes of fishing rods such as three through ten. In this case, the channel 250 just comprises a generally open hollow section as illustrated in Figure 15. This is best seen by examining figures 16 to 21. Therefore, on the small sizes of the second alternative embodiment which are designed to accommodate the smallest of the fishing rod such as numbers three through ten, there is no full channel or almost no channel, it is just hollow inside. In other words, the channel 250 for the line 100 is a tubular shaped hollow below the entry hole that extends to the distal tip C". The exit diameter is D"2. As previously stated, especially for smaller sizes, there can be a single-hollow-continuous channel and when the tip is attached it will be necessary to avoid having the tip of the pole or the glue occlude the entry hole 240.

A second alternative embodiment of the present invention is illustrated in Figures 15 - 21. Figure 15 is a perspective view of a second alternative embodiment of the present invention fishing rod tip with an interior chamber to accommodate the fishing line. Figure 16 is a cross-sectional view taken along line 16-16 of Figure 15. Figure 17 is a cross-sectional view taken along line 17-17 of Figure 15. Figure 18 is a cross-sectional view taken along line 18-18 of Figure 15 to show the opening of the channel. Figure 19 is a cross-sectional view taken along line 19-19 of Figure 15. Figure 20 is a cross-sectional view taken along line 20-20 of Figure 15. Figure 21 is a cross-sectional view taken along line 21-21 of Figure 15.

The second alternative embodiment of fishing line tip 210 comprises a generally cylindrical body at one section (L"1) which tapers to a conical designed exterior shape on the second section (L"2). The first section 212 of fishing line tip 210 comprises a proximal end having a thin sidewall 222 and 224 and an opening 218. The opening 218 is designed to accommodate the end of a fishing rod. When the present invention fishing rod tip is used with original equipment manufacture, the end of the fishing rod can be designed so that its diameter accommodates the diameter of the opening 218 and channel 226. If sold as an aftermarket product to be attached onto existing fishing rods, then the old tip should be removed per the standards of the industry. However, these tips will work when the tip of the pole has accidentally been broken off and/or when it is necessary to cut the old tip off because it had been put on with epoxy that wont release. The size of the opening 218 follows the sizes of fishing pole diameters 3 through 30. It increases approximately 1/64 of an inch for each increase in size. For example, a size 16 would be 16/64ths or 1/4 inch in diameter, a size 8 would be 8/64th or 1/8 inch in diameter. Therefore, the diameter 218 (also 226 on Figure 15) is designed to accommodate the smallest diameter fishing rod tip which is three 64ths to the largest diameter fishing rod tip which is thirty 64^{th}s. The first section 212 is generally cylindrical and the interior diameter 218 is also generally cylindrical in order to accommodate the diameter of the fishing rod tip. The length L"2 tapers from D"1 to C". The taper shown in L"2 of Figure 15 can be as shown, i.e. the bottom can be relatively flat and the top can angle down forming the taper. This can be reversed. Also, both the bottom and the top can both angle to create the taper. In other words, there are three ways to create the taper. However when considering the three ways to taper it, it must be remembered that the tip is three-dimensional and is also rounded in shape. Though throughout the descriptions, drawings and figures herein for this present invention, the cross section shape of these tips is referred to as round, nothing prevents them from being some degree of oval (in full or in part) in cross section if the other embodiments are present. The main disadvantage to oval is that it will be more expensive to manufacture, and, at least the part (the hole) the pole fits into should be round. All of these three methods of tapering worked equally well in the inventor's trials. Several things including the manufacturing cost will determine which method is used.

The length L"1 will vary depending upon the general size of the fishing pole. For fishing pole sizes 3 to 7, the length L"1 is approximately .5". While it is possible for the exterior surface 222 of the entire first section 212 to be generally cylindrical, in the preferred embodiment, the upper lengthwise edge 224 increases on a slight angular rise so that the top lengthwise exterior edge 224 progresses at an upward angle from point A" to point B so that the thickness of the wall at point B" is approximately 1/10" to 1/13" thicker than the wall thickness at point A". The tip of the fishing pole is inserted through opening 218 and extends through the length of interior cylindrical channel 226 and can be inserted all the way up to (but not beyond) entry hole 240. In order to maintain the tip of the fishing pole within the fishing rod tip, glue, epoxy or other adhesive is attached to the interior circumference of the chamber 226 or to the exterior surface of the tip of the fishing pole so that when it is inserted through opening 218 into chamber 226, it will be adhered to the walls of the interior chamber 226. The cross-sectional views of Figure 16 and Figure 17 show the increase in the wall thickness 224 as it rises from point A at the proximal end of the fishing rod tip to point B" at the approximate midpoint of the fishing rod tip. Fig. 18 of Fig 15 shows the entry hole at the top. Figure 15 is shown without flanges.

After the midpoint, on the upper surface of the fishing rod tip 210 is an opening 240 to accommodate the fishing line. The opening 240 leads to an interior channel 250 that extends the length of second section 260 of fishing rod tip 210. Second section 260 extends from point B" to point C" as illustrated in Figure 15. At the location 230 of upper surface 224 immediately before the opening 240, the area in front of the opening 240 is slightly flattened to provide a more smooth transition for the fishing line to enter the opening. Beyond the location B", the diameter of the fishing rod tip then tapers toward the distal tip at point C". Therefore, the diameter D"2 at the distal end of the fishing rod tip is less than the diameter at D"1.

To reduce friction, the edge at 252 of the tip of channel 250 is rounded, smooth, polished, coated etc around its entire circumference. The shape of the channel 250 for the fishing line is determined by the internal dimensions of L"2. It should be noted that the thickness of the walls (in most cases) of these present inventions would be very equivalent to the thickness now used by the industry in making normal fishing eyes. This would range from about ½ the thickness of an American dime to that of a nickel. Therefore, to some extent, the shape of the line channel is determined by the thickness of the material used. The second alternative embodiment 210 which is designed to accommodate the smaller size poles 3 to 10 is an open channel 250. In some cases, the interior wall 254 of the channel 250 is coated with material such as silicon oxide, aluminum oxide, carbide, hard alloy etc. in order to facilitate smooth action of the line against the interior wall 254. The exit diameter of the channel which is D"2 is as large as is possible after allowing for the taper to reduce its diameter, and after considering the thickness of the material the tips will be made from. As stated, the second section 260 is conical (tapered) on the outside wall 262 so that if the fishing line 100 did wrap around the wall, all that is necessary to get the line to unwrap is to hold the tip downward so gravity will unwrap the line and let it peel off, or to over-head cast it off.

The length L"2 of second section 260 which is also approximately one-half the total length of the fishing rod tip so for sizes 3 through 7, the length L"2 is approximately .5" to ¾ inches. Therefore, the total length of the fishing rod tip from proximal end A" to distal end C" is approximately one to one and one half inches. The fishing line 100 which extends from the fishing pole reel extends over surface 224 and enters opening 240 and then extends inside the interior channel 250 to the distal tip C". The optional 1/10" to 1/13" extra thickness of upper edge 224 as previously discussed allows the entry hole 240 to be slightly elevated so that the fishing line 100 can enter it without rubbing on the surface below. The 1/10" to 1/13" is small enough so that it does not defeat the concept of conical tapering, and as stated, is only thicker on the top. The sides and the bottom can be tapered to compensate. While this increased extra thickness of 1/10" to 1/13" is not absolutely necessary as a flat non-raised tubular shape will also work, this extra thickness provides the benefit as just discussed.

In most cases, the channel for the fishing line starts just beyond where the inserted fishing pole ends. The entry hole 240 of the channel 250 is round or transversely oval, but takes on a more longitudinally oval shape if it is cast into a conical slope. The entry hole 240 is as large as possible without significantly decreasing the strength of the tip so that it could be bent or broken. The fishing line 100 is to be threaded through the entry hole and into this channel. At the distal tip 252, the circumference the channel is smooth, polished, coated, rounded etc to further reduce friction and to allow less strain on the fishing line.

As discussed, the entry hole 240 to the channel 250 starts in or just behind a slightly depressed or flattened area 230 on the upper surface 224. This depressed area 230 allows a larger fishing line entry hole without increasing the fishing tip diameter, and also allows a straighter path to the channel at the same time as reducing friction from the line rubbing on the surface below.

The shapes as discussed above, besides preventing wraps, also allows for longer and more accurate casting. This is in part due to the fact that the line exits in a straighter line than it would through a normal guide. In a normal guide the line can flop around so that it is on the top, bottom, right or left side of the terminal eye. One additional optional feature is to have one flange that is adjacent the opening 226 and which has score lines on the outside. A flange is not shown in Figure 15 as it is really not necessary in the very small sizes, though it could be helpful in special circumstance. Though not likely, it will be appreciated that the flanges could possibly take the place of the epoxy and adhesive and the fishing rod tip can be inserted into the channel 226 through opening 218 and then held in place by means of at least one or a multiplicity of flanges being wrapped with conventional fishing pole wrapping or heat shrink type of wrapping. The flanges, if used, have very thin grooves on the outside of the flange. The flanges are somewhat flexible so they are easily bent (or compressed) to seat next to the shaft of the fishing pole. These flanges can be wrapped in line of various colors in the usual manner typical of the industry for attaching eyes to poles. Again, the flanges are slightly thinner at their outer part than where they attach at A' in Figure 8 or A in fig 1. This thinner concept allows them to be more flexible so as to adhere to the pole at the same time as it allows any wrapping or heat shrink to be applied smoothly.

The third alternative embodiment of the present invention is illustrated in Figure 22. By way of example, the third alternative embodiment is illustrated with utilization of the preferred embodiment illustrated in Figures 1 through 7 but it will be appreciated that the optional feature which is a threaded attachment means it can be incorporated into the first alternative embodiment illustrated in Figures 8 through 14 and in the second alternative embodiment illustrated in Figures 15 through 21. The alternative threaded embodiment illustrated in Figure 22 requires two separate sections to the fishing rod tip. A first section is a base member 400 that is hollow at one end that has a hollow opening 418 which is designed to accommodate the tip of the fishing pole. The fishing pole is permanently attached to the base 400 by having the fishing pole inserted through opening 418 and extending into interior chamber 426 and affixed to the base 400 by means of epoxy or other adhesive as previously described. In addition, the base can also incorporate flanges 470 as previously described.

Therefore, the proximal end of the base 400 is designed to accommodate the pole tip as previously discussed. For fishing pole sizes three through seven, the length of the base B 1 is approximately 0.5 to 0.75". For fishing pole sizes 8 through 12, the length of the base 400 is about 0 .75 to 1.0". For fishing pole sizes 14 through 30, the length is approximately one to one and one half inches". The distal end 452 has a multiplicity of fine threads 430 on the exterior surface 440 of the base 400. The purpose of the fine threads 430 on the base is to permit the fishing rod tip to be screwed onto the base so that the fishing rod tip can be removed and/or replaced with another fishing rod tip.

The third alternative embodiment of the present invention is identical to the preferred embodiment illustrated in Figures 1 through 7, except the interior wall 328 has a multiplicity of mating threads 327 that are designed to allow the fishing rod tip (300 in Figure 22) to be screwed onto the threads 430 of base 400. This allows various sizes and shapes of the fishing rod tips to be screwed on, i.e. terminal tips are interchangeable. Some tips will have a very wide channel 350 and entry hole so as to allow a knot to pass through. When screwed together, they fit tightly with the overlapping part of the distal tip (end lip 375) fitting closely, to the body of the base 440, and due to the thinness of the material, there is no hub or surface to snag the line or collect dirt. They are manufactured so that when screwed on tightly, the threads do not interfere with the entry hole. In all cases, the threads 430 and 327 are arranged so that when tightly screwed on, the entry hole is in line with the other guides on the pole. The surfaces of the entry hole and channel can be coated as described. The vertical line 380 on Figure 22 represents about where the internal threads stop (same concept as 120 on Figure 8 and 20 in Figure 1). Beyond 380 is what has been previously referred to as the barrier, i.e. solid material that prevents the pole from being inserted too far. It is not necessary to have a barrier, but instead the interior wall 328 could continue (no barrier) and exit at the exit hole 390. In other words, it could be a continuous hollow channel that is internally threaded only at the lip end, the threads then stop, and the now smooth hollow channel exits at 390. Again, when screwed on tightly, the threads must allow for the entry hole to line up with the other eyes or guides on the pole. Also, the threads in the base 430 should not block the entry hole 340. It must be noted that with this screw on arrangement it is impossible to insert the pole too far because the pole stops inside 440. This is also true about glue blocking the entry hole. If there is a flattened area it is at 395.

One of the unique features is that no other fishing pole allows changing of the tips without ungluing or cutting off the old tip or guide. It will be appreciated that although illustrated with the embodiment in Figure 1, the interior threads on the proximal end of the fishing rod tip can be incorporated into the first alternative embodiment illustrated in Figures 8 through 14 and the second alternative embodiment illustrated in Figures 15 through 21.

The advantage in having interchangeable fishing rod tips is that the various shaped and sized tip or guides can be used for different type of fish or fishing requirements. Screw-on normal eyes and screw-on normal roller guides are possible. An example is changing the tip when you want to troll. In other words, the present invention tips that screw on can also be arced or curved.

The integral changeable feature can also be incorporated into other additional tips such as roller guides as illustrated in Figure 23. Through use of this alternative embodiment of the present invention, fisherman can have a set of different end tips and guides so that he can unscrew the existing tip and replace it with a substitute tip as may be needed. The threaded roller guide as illustrated in Figure 23 can be substituted for the present invention tip so that the roller guide tip can be used in place of the present invention tip should the fisherman have a need to use a roller guide. This also allows changing the rolle guides in the field such as when they are damaged. However, as previously stated, the arc version of these new tips does everything the roller guides do without their inherent problems. Additionally, the arc version is cheaper, easier to maintain, less prone to breaking etc.

Through use of the present invention interchangeable tip, the fisherman will be able to take fewer poles on a fishing trip and be able to change the type of tip per any change in the type of fishing.

In addition to the secure threaded engagement as discussed above, additional embellishments can be added to the threaded sections so that the tip can be prevented from accidentally unscrewing. This could be a grooved area in the base 400 that lines up with the grooved area on the distal tip (300 on Figure 22) such that a retaining pin is inserted into the grooved area. This retaining pin is about paper clip thickness and would snap into place yet be easily removable. If there is to be a retaining pin, the groves for it should be on the bottom, i.e. the opposite side as the line entry hole. In the case of this present invention threaded tip, the groves would align when (only when) it is tightly screwed on. This retaining pin can be very similar to what is called a "Woodruff Key". The Woodruff Key can be inserted to prevent the proximal end of the guide from accidentally unscrewing from the distal end of the base. Again, as previously stated, the same thing (i.e. accidentally unthreading) can be accomplished with one wrap of a waterproof tape such as electrical tape. However, and with emphasis, if properly fine threaded, it is very unlikely they will accidentally unscrew.

In production there will be a mark (dot, dimple etc.) on the top of the threaded base. This mark will allow any one attaching it to the pole to have this mark always on the top of the pole ("alignment mark"). Alternatively, this alignment mark could be the groove line (indentation) for the retaining pin, if any, (and/or an alignment mark as described above), on the bottom of the base, wherein anyone attaching it would be told to have this alignment mark on the bottom. In other words, this alignment mark allows attaching the base to the pole in a known manner as to where the threads on both parts will begin and end. The threads will be adjusted so that when any (different) distal tip is screwed on, they will stop screwing on so that the line entry hole will be properly aligned with the other guides on the pole. In other words, it is necessary to have the base attached to the pole with specificity as to its circumference, so that the threads begin and end, so that the tip when screwed on will always stop when the threads reach their limit, causing the line entry hole to be on top. Nothing stops the alignment mark from being an individual manufacturer's trademark, name, product code, identification marking etc.

The present invention is not intended to be restricted to any particular form or arrangement, or any specific embodiment, or any specific use, disclosed herein, since the same may be modified in various particulars or relations without departing from the spirit or scope of the claimed invention hereinabove shown and described of which the apparatus or method shown is intended only for illustration and for disclosure of an operative embodiment and not to show all of the various forms or modifications in which the present invention might be embodied or operated.

The present invention has been described in considerable detail in order to comply with the patent laws by providing full public disclosure of at least one of its forms. However, such detailed description is not intended in any way to limit the broad features or principles of the present invention, or the scope of the patent to be granted. Therefore, the invention is to be limited only by the scope of the appended claims.

## Claims

1. A tip for attachment to a fishing rod, the tip comprising:
a. a body having a first section and a second section;
b. said first section having a transverse opening at its proximal end leading to an interior chamber, the transverse opening and the interior chamber sized so that an end of a fishing rod can be inserted through the transverse opening and retained in the chamber;
c. said first section having a generally cylindrical exterior surface, the upper portion of the exterior surface extending at an upward angle from its proximal end to its distal end such that the distal end of the upper exterior surface is higher than the proximal end of the upper exterior surface and the exterior wall is thicker at the distal end;
d. the second section extending away from the distal end of the first section, the second section having an upper surface having a depression adjacent the distal end of the first section and thereafter having an entry opening leading to an interior channel that extends the remaining length of the second section and terminates in a distal tip opening, the interior channel having an interior wall which is flared at the location adjacent the tip opening; and
e. the exterior surface of said second section being generally conical in shape, its proximal end being approximately the same diameter as the distal end of said first section, the distal tip of the second section having a smaller size than its proximal end;
f. whereby when said tip is attached to a fishing rod, the fishing line from the fishing rod extends along the upper exterior surface of said first section, extends over said depression and extends into the entry opening in the upper surface of said second section and extends through the interior channel of said second section and out the distal tip.

2. A tip for attachment to a fishing rod, the tip comprising:
a. a body having a first section and a second section;
b. said first section having a transverse opening at its proximal end leading to an interior chamber, the transverse opening and the interior chamber sized so that an end of a fishing rod can be inserted through the transverse opening and retained in the chamber;
c. said first section having a generally cylindrical exterior surface from its proximal end to its distal end;
d. the second section extending away from the distal end of the first section, the second section having an upper surface having an entry opening leading to an interior channel that extends the remaining length of the second section and terminates in a distal tip opening, the interior channel having an interior wall which is flared at the location adjacent the tip opening; and
e. the exterior surface of said second section being generally conical in shape, the distal tip of the second section having a smaller size than its proximal end;
f. whereby when said tip is attached to a fishing rod, the fishing line from the fishing rod extends along the upper exterior surface of said first section, extends into the entry opening in the upper surface of said second section and extends through the interior channel of said second section and out the distal tip.

3. A tip for attachment to a fishing rod, the tip comprising:
a. a body having a first section and a second section;
b. said first section having a transverse opening at its proximal end leading to an interior chamber, the transverse opening and the interior chamber sized so that an end of a fishing rod can be inserted through the transverse opening and retained in the chamber;
c. the second section extending away from the distal end of the first section, the second section having an upper surface;
d. said first section and said second section having adjoining upper exterior surfaces forming the upper surface of said tip;
e. the upper surface of said tip having an entry opening leading to an interior channel that extends from the entry opening through said second section and terminates in a distal tip opening; and
f. the exterior surface of said second section being generally conical in shape, the distal tip of the second section having a smaller size than its proximal end;
g. whereby when said tip is attached to a fishing rod, the fishing line from the fishing rod extends along the upper exterior surface of said tip, extends into the entry opening and extends through the interior channel of said second section and out the distal tip.

4. A tip for attachment to a fishing rod, the tip comprising:
a. a body having a first section and a second section;
b. said first section having a transverse opening at its proximal end leading to an interior chamber, the transverse opening and the interior chamber sized so that an end of a fishing rod can be inserted through the transverse opening and retained in the chamber;
c. said first section having a generally cylindrical exterior surface, the upper portion of the exterior surface extending at an upward angle from its proximal end to its distal end such that the distal end of the upper exterior surface is higher than the proximal end of the upper exterior surface and the exterior wall is thicker at the distal end;
d. the second section being arcuate and extending away in a downward arc from the distal end of the first section, the second section having an upper surface having a depression adjacent the distal end of the first section and thereafter having an entry opening leading to an arcuate interior channel that extends the remaining length of the second section and terminates in a distal tip opening, the arcuate interior channel having an arcuate interior wall which is flared at the location adjacent the tip opening; and
e. the exterior surface of said second section being generally conical and arcuate in shape, its proximal end being approximately the same diameter as the distal end of said first section, the distal tip of the second section having a smaller size than its proximal end and extending below the proximal end;
f. whereby when said tip is attached to a fishing rod, the fishing line from the fishing rod extends along the upper exterior surface of said first section, extends over said depression and extends into the entry opening in the upper surface of said second section and extends through the interior channel of said second section and out the distal tip.

5. A tip for attachment to a fishing rod, the tip comprising:
a. a body having a first section and a second section;
b. said first section having a transverse opening at its proximal end leading to an interior chamber, the transverse opening and the interior chamber sized so that an end of a fishing rod can be inserted through the transverse opening and retained in the chamber;
c. said first section having a generally cylindrical exterior surface from its proximal end to its distal end;
d. the second section being arcuate and extending away in a downward arc from the distal end of the first section, the second section having an upper surface having an entry opening leading to an arcuate interior channel that extends the remaining length of the second section and terminates in a distal tip opening, the arcuate interior channel having an interior wall which is flared at the location adjacent the tip opening; and
e. the exterior surface of said second section being generally conical and arcuate in shape, the distal tip of the second section having a smaller size than its proximal end and extending below the proximal end;
f. whereby when said tip is attached to a fishing rod, the fishing line from the fishing rod extends along the upper exterior surface of said first section, extends into the entry opening in the upper surface of said second section and extends through the interior channel of said second section and out the distal tip.

6. A tip for attachment to a fishing rod, the tip comprising:
a. a body having a first section and a second section;
b. said first section having a transverse opening at its proximal end leading to an interior chamber, the transverse opening and the interior chamber sized so that an end of a fishing rod can be inserted through the transverse opening and retained in the chamber;
c. the second section being arcuate and extending in a downward arc away from distal end of the first section, the second section having an upper surface;
d. said first section and said second section having adjoining upper exterior surfaces forming the upper surface of said tip;
e. the upper surface of said tip having an entry opening leading to an interior channel that extends from the entry opening through said second section and terminates in a distal tip opening; and
f. the exterior surface of said second section being generally conical in shape, the distal tip of the second section having a smaller size than its proximal end;
g. whereby when said tip is attached to a fishing rod, the fishing line from the fishing rod extends along the upper exterior surface of said tip, extends into the entry opening and extends through the interior channel of said second section and out the distal tip.

7. A tip for attachment to a fishing rod, the tip comprising:
a. a body having a first section and a second section;
b. said first section having a transverse opening at its proximal end leading to an interior chamber, the transverse opening and the interior chamber sized so that an end of a fishing rod can be inserted through the transverse opening and retained in the chamber;
c. said first section having a generally cylindrical exterior surface, the upper portion of the exterior surface extending at an upward angle from its proximal end to its distal end such that the distal end of the upper exterior surface is higher than the proximal end of the upper exterior surface and the exterior wall is thicker at the distal end;
d. the second section extending away from the distal end of the first section, the second section having an upper surface having a depression adjacent the distal end of the first section and thereafter having an entry opening leading to an interior chamber that extends the remaining length of the second section and terminates in a distal tip opening; and
e. the exterior surface of said second section being generally conical in shape, its proximal end being approximately the same diameter as the distal end of said first section, the distal tip of the second section having a smaller size than its proximal end;
f. whereby when said tip is attached to a fishing rod, the fishing line from the fishing rod extends along the upper exterior surface of said first section, extends over said depression and extends into the entry opening in the upper surface of said second section and extends through the interior chamber of said second section and out the distal tip.

8. A tip for attachment to a fishing rod, the tip comprising:
a. a body having a first section and a second section;
b. said first section having a transverse opening at its proximal end leading to an interior chamber, the transverse opening and the interior chamber sized so that an end of a fishing rod can be inserted through the transverse opening and retained in the chamber;
c. said first section having a generally cylindrical exterior surface from its proximal end its distal end;
d. the second section extending away from the distal end of the first section, the second section having an upper surface having an entry opening leading to an interior chamber that extends the remaining length of the second section and terminates in a distal tip opening; and
e. the exterior surface of said second section being generally conical in shape, the distal tip of the second section having a smaller size than its proximal end;
f. whereby when said tip is attached to a fishing rod, the fishing line from the fishing rod extends along the upper exterior surface of said first section, extends into the entry opening in the upper surface of said second section and extends through the interior chamber of said second section and out the distal tip.

9. A tip for attachment to a fishing rod, the tip comprising:
a. a body having a first section and a second section;
b. said first section having a transverse opening at its proximal end leading to an interior chamber, the transverse opening and the interior chamber sized so that an end of a fishing rod can be inserted through the transverse opening and retained in the chamber;
c. the second section extending away from the distal end of the first section, the second section having an upper surface;
d. said first section and said second section having adjoining upper exterior surfaces forming the upper surface of said tip;
e. the upper surface of said tip having an entry opening leading to an interior channel that extends from the entry opening through said second section and terminates in a distal tip opening; and
f. the distal tip of the second section having a smaller size than its proximal end;
g. whereby when said tip is attached to a fishing rod, the fishing line from the fishing rod extends along the upper exterior surface of said tip, extends into the entry opening and extends through the interior chamber of said second section and out the distal tip.

10. A tip for attachment to a fishing rod, the tip comprising:
a. a base member having a transverse opening at its proximal end leading to an interior chamber, the transverse opening and the interior chamber sized so that an end of a fishing rod can be inserted through the transverse opening and retained in the interior chamber;
b. the base member having an exterior surface which further comprises threads on the exterior surface adjacent its distal end;
c. a tip member having a first section and a second section;
d. said first section having a transverse opening at its proximal end leading to an interior chamber, the wall of the interior chamber adjacent its proximal end having threads to accommodate and receive the threads on said base member such that the first section can be removably threaded onto said base member;
e. said first section having a generally cylindrical exterior surface, the upper portion of the exterior surface extending at an upward angle from its proximal end to its distal end such that the distal end of the upper exterior surface is higher than the proximal end of the upper exterior surface and the exterior wall is thicker at the distal end;
f. the second section extending away from the distal end of the first section, the second section having an upper surface having a depression adjacent the distal end of the first section and thereafter having an entry opening leading to an interior channel that extends the remaining length of the second section and terminates in a distal tip opening, the interior channel having an interior wall which is flared at the location adjacent the tip opening; and
g. the exterior surface of said second section being generally conical in shape, its proximal end being approximately the same diameter as the distal end of said first section, the distal tip of the second section having a smaller size than its proximal end;
h. whereby when said tip is attached to a fishing rod, the fishing line from the fishing rod extends along the upper exterior surface of said first section, extends over said depression and extends into the entry opening in the upper surface of said second section and extends through the interior channel of said second section and out the distal tip.

11. A tip for attachment to a fishing rod, the tip comprising:
a. a base member having a transverse opening at its proximal end leading to an interior chamber;
b. the base member having an exterior surface which further comprises threads on the exterior surface adjacent its distal end;
c. a tip member having a first section and a second section;
d. said first section having a transverse opening at its proximal end leading to an interior chamber, the wall of the interior chamber adjacent its proximal end having threads to accommodate and receive the threads on said base member such that the first section can be removably threaded onto said base member;
e. said first section having a generally cylindrical exterior surface from its proximal end to its distal end;
f. the second section extending away from the distal end of the first section, the second section having an upper surface having an entry opening leading to an interior channel that extends the remaining length of the second section and terminates in a distal tip opening, the interior channel having an interior wall which is flared at the location adjacent the tip opening; and
g. the exterior surface of said second section being generally conical in shape, the distal tip of the second section having a smaller size than its proximal end;
h. whereby when said tip is attached to a fishing rod, the fishing line from the fishing rod extends along the upper exterior surface of said first section, extends into the entry opening in the upper surface of said second section and extends through the interior channel of said second section and out the distal tip.

12. A tip for attachment to a fishing rod, the tip comprising:
a. a base member having a transverse opening at its proximal end leading to an interior chamber, the transverse opening and the interior chamber sized so that an end of a fishing rod can be inserted through the transverse opening and retained in the interior chamber;
b. the base member having an exterior surface which further comprises threads on the exterior surface adjacent its distal end;
c. a tip member having a first section and a second section;
d. said first section having a transverse opening at its proximal end leading to an interior chamber, the wall of the interior chamber adjacent its proximal end having threads to accommodate and receive the threads on said base member such that the first section can be removably threaded onto said base member;
e. the second section extending away from the distal end of the first section, the second section having an upper surface;
f. said first section and said second section having adjoining upper exterior surfaces forming the upper surface of said tip;
g. the upper surface of said tip having an entry opening leading to an interior channel that extends from the entry opening through said second section and terminates in a distal end opening; and
h. the exterior surface of said second section being generally conical in shape, the distal tip of the second section having a smaller size than its proximal end;
i. whereby when said tip is attached to a fishing rod, the fishing line from the fishing rod extends along the upper exterior surface of said tip, extends into the entry opening and extends through the interior channel of said second section and out the distal tip.

13. A tip for attachment to a fishing rod, the tip comprising:
a. a base member having a transverse opening at its proximal end leading to an interior chamber, the transverse opening and the interior chamber sized so that an end of a fishing rod can be inserted through the transverse opening and retained in the interior chamber;
b. the base member having an exterior surface which further comprises threads on the exterior surface adjacent its distal end;
c. a tip member having a first section and a second section;
d. said first section having a transverse opening at its proximal end leading to an interior chamber, the wall of the interior chamber adjacent its proximal end having threads to accommodate and receive the threads on said base member such that the first section can be removably threaded onto said base member;
e. said first section having a generally cylindrical exterior surface, the upper portion of the exterior surface extending at an upward angle from its proximal end to its distal end such that the distal end of the upper exterior surface is higher than the proximal end of the upper exterior surface and the exterior wall is thicker at the distal end;
f. the second section being arcuate and extending away from the distal end of the first section, the second section having an upper surface having a depression adjacent the distal end of the first section and thereafter having an entry opening leading to an arcuate interior channel that extends the remaining length of the second section and terminates in a distal tip opening, the arcuate interior channel having an arcuate interior wall which is flared at the location adjacent the tip opening; and
g. the exterior surface of said second section being generally conical and arcuate in shape, its proximal end being approximately the same diameter as the distal end of said first section, the distal tip of the second section having a smaller size than its proximal end and extending below the proximal end;
h. whereby when said tip is attached to a fishing rod, the fishing line from the fishing rod extends along the upper exterior surface of said first section, extends over said depression and extends into the entry opening in the upper surface of said second section and extends through the interior channel of said second section and out the distal tip.

14. A tip for attachment to a fishing rod, the tip comprising:
a. a base member having a transverse opening at its proximal end leading to an interior chamber, the transverse opening and the interior chamber sized so that an end of a fishing rod can be inserted through the transverse opening and retained in the interior chamber;
b. the base member having an exterior surface which further comprises threads on the exterior surface adjacent its distal end;
c. a tip member having a first section and a second section;
d. said first section having a transverse opening at its proximal end leading to an interior chamber, the wall of the interior chamber adjacent its proximal end having threads to accommodate and receive the threads on said base member such that the first section can be removably threaded onto said base member;
e. said first section having a generally cylindrical exterior surface from its proximal end to its distal end;
f. the second section being arcuate and extending away from the distal end of the first section, the second section having an upper surface having an entry opening leading to an arcuate interior channel that extends the remaining length of the second section and terminates in a distal tip opening, the arcuate interior channel having an interior wall which is flared at the location adjacent the tip opening; and
g. the exterior surface of said second section being generally conical and arcuate in shape, the distal tip of the second section having a smaller size than its proximal end and extending below the proximal end;
h. whereby when said tip is attached to a fishing rod, the fishing line from the fishing rod extends along the upper exterior surface of said first section, extends into the entry opening in the upper surface of said second section and extends through the interior channel of said second section and out the distal tip.

15. A tip for attachment to a fishing rod, the tip comprising:
a. a base member having a transverse opening at its proximal end leading to an interior chamber, the transverse opening and the interior chamber sized so that an end of a fishing rod can be inserted through the transverse opening and retained in the interior chamber;
b. the base member having an exterior surface which further comprises threads on the exterior surface adjacent its distal end;
c. a tip member having a first section and a second section;
d. said first section having a transverse opening at its proximal end leading to an interior chamber, the wall of the interior chamber adjacent its proximal end having threads to accommodate and receive the threads on said base member such that the first section can be removably threaded onto said base member;
e. the second section extending away from the distal end of the first section, the second section having an upper surface;
f. said first section and said second section having adjoining upper exterior surfaces forming the upper surface of said tip;
g. the upper surface of said tip having an entry opening leading to an interior channel that extends from the entry opening through said second section and terminates in a distal tip opening; and
h. the exterior surface of said second section being generally conical and arcuate in shape, the distal tip of the second section having a smaller size than its proximal end and extending below the proximal end;
i. whereby when said tip is attached to a fishing rod, the fishing line from the fishing rod extends along the upper exterior surface of said tip, extends into the entry opening and extends through the interior channel of said second section and out the distal tip.

16. A tip for attachment to a fishing rod, the tip comprising:
a. a base member having a transverse opening at its proximal end leading to an interior chamber, the transverse opening and the interior chamber sized so that an end of a fishing rod can be inserted through the transverse opening and retained in the interior chamber;
b. the base member having an exterior surface which further comprises threads on the exterior surface adjacent its distal end;
c. a tip member having a first section and a second section;
d. said first section having a transverse opening at its proximal end leading to an interior chamber, the wall of the interior chamber adjacent its proximal end having threads to accommodate and receive the threads on said base member such that the first section can be removably threaded onto said base member;
e. said first section having a generally cylindrical exterior surface, the upper portion of the exterior surface extending at an upward angle from its proximal end to its distal end such that the distal end of the upper exterior surface is higher than the proximal end of the upper exterior surface and the exterior wall is thicker at the distal end;
f. the second section extending away from the distal end of the first section, the second section having an upper surface having a depression adjacent the distal end of the first section and thereafter having an entry opening leading to an interior chamber that extends the remaining length of the second section and terminates in a distal tip opening; and
g. the exterior surface of said second section being generally conical in shape, its proximal end being approximately the same diameter as the distal end of said first section, the distal tip of the second section having a smaller size than its proximal end;
h. whereby when said tip is attached to a fishing rod, the fishing line from the fishing rod extends along the upper exterior surface of said first section, extends over said depression and extends into the entry opening in the upper surface of said second section and extends through the interior chamber of said second section and out the distal tip.

17. A tip for attachment to a fishing rod, the tip comprising:
a. a base member having a transverse opening at its proximal end leading to an interior chamber, the transverse opening and the interior chamber sized so that an end of a fishing rod can be inserted through the transverse opening and retained in the interior chamber;
b. the base member having an exterior surface which further comprises threads on the exterior surface adjacent its distal end;
c. a tip member having a first section and a second section;
d. said first section having a transverse opening at its proximal end leading to an interior chamber, the wall of the interior chamber adjacent its proximal end having threads to accommodate and receive the threads on said base member such that the first section can be removably threaded onto said base member;
e. said first section having a generally cylindrical exterior surface from its proximal end to its distal end;
f. the second section extending away from the distal end of the first section, the second section having an upper surface having an entry opening leading to an interior chamber that extends the remaining length of the second section and terminates in a distal tip opening; and
g. the exterior surface of said second section being generally conical in shape, the distal tip of the second section having a smaller size than its proximal end;
h. whereby when said tip is attached to a fishing rod, the fishing line from the fishing rod extends along the upper exterior surface of said first section, extends into the entry opening in the upper surface of said second section and extends through the interior chamber of said second section and out the distal tip.

18. A tip for attachment to a fishing rod, the tip comprising:
a. a base member having a transverse opening at its proximal end leading to an interior chamber, the transverse opening and the interior chamber sized so that an end of a fishing rod can be inserted through the transverse opening and retained in the interior chamber;
b. the base member having an exterior surface which further comprises threads on the exterior surface adjacent its distal end;
c. a tip member having a first section and a second section;
d. said first section having a transverse opening at its proximal end leading to an interior chamber, the wall of the interior chamber adjacent its proximal end having threads to accommodate and receive the threads on said base member such that the first section can be removably threaded onto said base member;
e. the second section extending away from the distal end of the firsti section, the second section having an upper surface;
f. said first section and said second section having adjoining upper exterior surfaces forming the upper surface of said tip;
g. the upper surface of said tip having an entry opening leading to an interior channel that extends from the entry opening through said second section and terminates in a distal tip opening; and
h. the distal tip of the second section having a smaller size than its proximal end and extending below the proximal end;
i. whereby when said tip is attached to a fishing rod, the fishing line from the fishing rod extends along the upper exterior surface of said tip, extends into the entry opening and extends through the interior channel of said second section and out the distal tip.

19. A tip for attachment to a fishing rod, the tip comprising:
a. a base member having a transverse opening at its proximal end leading to an interior chamber, the transverse opening and the interior chamber sized so that an end of a fishing rod can be inserted through the transverse opening and retained in the interior chamber;
b. the base member having an exterior surface which further comprises threads on the exterior surface adjacent its distal end; and
c. a roller guide member having threads adjacent its proximal end which are threaded onto the threads on said base member.
